# EUROPEAN PATENT SPECIFICATION

(11) **EP 1 692 988 B1**
(45) Date of publication and mention of the grant of the patent: **29.08.2007**
(21) Application number: 06001185.5
(22) Date of filing: 20.01.2006
(51) Int. Cl.: A47J 37/01, A47J 45/07, A21B 3/13, F24C 15/16

(54) **Molded aluminium tray for foodstuff**
Formgepresstes Backblech aus Aluminium
Plateau de cuisson moulé en aluminium

(30) Priority: 17.02.2005 IT TO20050025
(43) Date of publication of application: 23.08.2006
(73) Proprietor: Comital Cofresco S.p.A., 10088 Volpiano (Torino) (IT)
(72) Inventor: Ceppaluni, Leopoldo, 03100 Frosinone (IT)
(74) Representative: Spandonari, Carlo

(56) References cited:
- DE-U1- 29 519 823
- US-A- 4 717 038
- US-A- 4 969 569

## Description

The present invention relates to a molded aluminum-sheet tray for foodstuff.

Expendable trays are widely used for baking foodstuff such as cakes, lasagna, puff-pastry, and the like. These trays are manufactured from an aluminum sheet, which is drawn into the typical dished shape with a rectangular bottom and a cantilever, upper edge. Such a tray is disclosed in US-A-4969569.

A drawback of the known trays is that, when the tray is full and subjected to the weight of the food, it is difficult for the user to handle it, e.g., in order to put the tray into the oven or draw the tray out of it, because the tray can only be held by the cantilever edge which, however, is very narrow and, consequently, it does not provide a firm grip. This drawback is particularly relevant when the tray is drawn out of the oven after baking, because the user, in order to protect himself from burning, uses gloves or pot-holders which inevitably hamper him while holding the tray, with a very difficult and precarious grip.

With the intention of overcoming the above drawback, aluminum trays have been made, which are provided with a cantilever edge having an enlarged profile along the shorter sides of the tray, in order to make it easier to grasp the tray.

However, this system requires a greater use of material, with a considerable increase in the cost of the tray and, in addition, it is not fully satisfactory in terms of ease and firmness of the grip.

Therefore, it is a main object of the present invention to provide a molded aluminum-sheet tray for foodstuff which is improved to be easier to handle, as well as more comfortable and firm, with respect to the traditional aluminum trays.

Another object of the invention is to provide a tray having manufacturing costs comparable with a traditional tray.

The above object and other advantages, which will better appear below, are achieved by an aluminum-sheet tray having the features recited in claim 1, while the other claims state other advantageous features of the invention.

The invention will be now described in more detail with reference to a preferred, non-exclusive embodiment, shown by way of non-limiting example in the attached drawings, wherein:

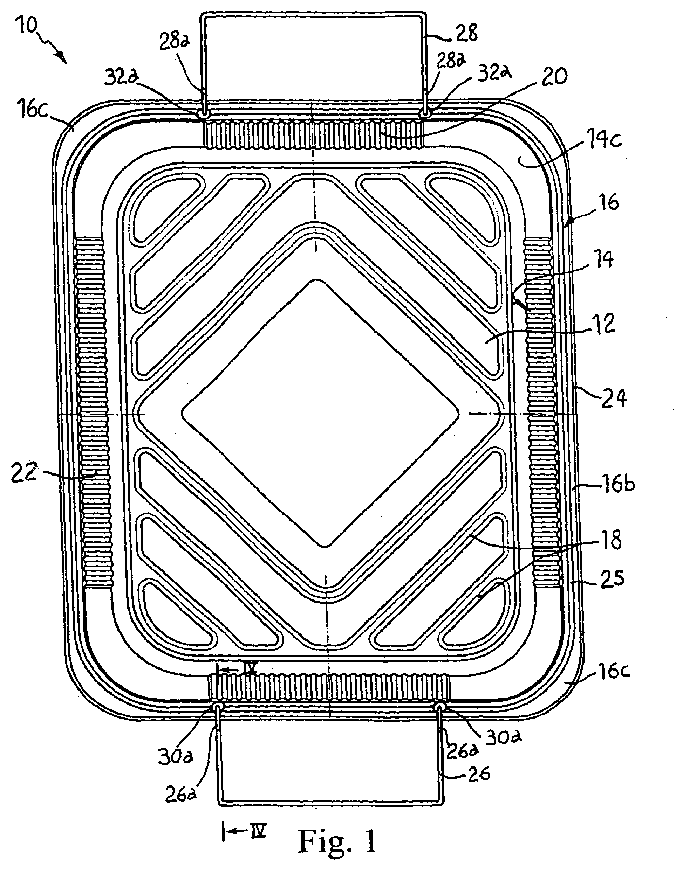

Fig. 1 is a plan view of an aluminum-sheet tray according to the invention;

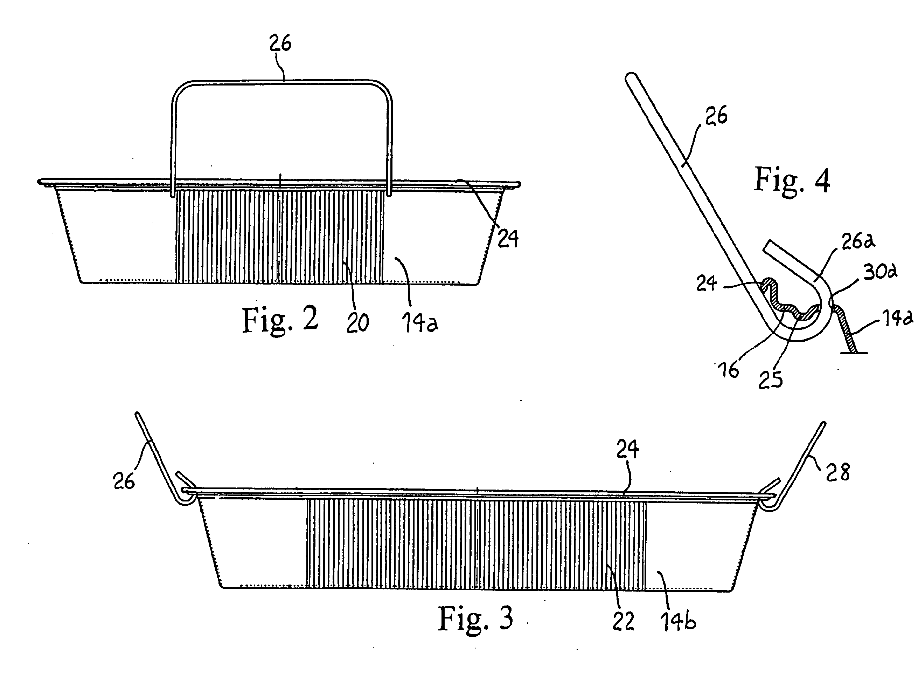

Fig. 2 is a front view of the aluminum tray of Fig. 1;
Fig. 3 is a side view of the aluminum tray of Fig. 1;
Fig. 4 is a cross-section view along line IV-IV of the aluminum tray of Fig. 1.

With reference to the above Figures, an aluminum-sheet tray 10 has a bottom 12 and a tapered, peripheral wall 14 having an upper lip that is bent outwards to form a substantially rectangular, cantilever edge 16.

Bottom 12 is substantially rectangular with rounded corners, and is shaped with a mesh of stiffening beads 18. Peripheral wall 14 has two shorter side walls 14a and two longer side walls 14b connected by curved, corner walls 14c which follow the profile of the rounded corners of bottom 12. Side walls 14a, 14b is shaped with close rows of vertical, stiffening beads 20, 22.

The profile of edge 16 continuously matches with the upper end of peripheral wall 14, with rectilinear portions 16a, 16b along side walls 14a, 14b, and curved portions such as 16c along corner walls 14c. The outer border of edge 16 is curled to form a cut-safe frame 24. Edge 16 has a stiffening groove 25 impressed thereon, which continuously extends along its axis.

According to this invention, tray 10 is provided with a pair of removable handles 26, 28, each consisting of a C-bent metal wire, whose opposite ends 26a, 28a are bent into a hook shape and are removably inserted into respective holes 30a, 32a which are bored in the shorter rectilinear portions 16a of edge 16, at the opposite sides of the longitudinal axis of the tray, in a mirror arrangement.

Advantageously, holes 30a, 32a are located near the inner border of edge 16, i.e., at the upper end of shorter side walls 14a, in order to take advantage of the stiffeness of the curled frame 24 of edge 16 and of the stiffeness of groove 25 for increasing the maximum load of the tray when lifted by the handles 26, 28.

The metal wire used for manufacturing the handles is a stainless-steel, round bar 1 to 2 mm in diameter, preferably 1.5 mm.

The tray may be made of a naked, or laked, semi-thin aluminum sheet of a conventional type such as used for manufacturing traditional, handleless trays.

The above tray, as will be clear to the person skilled in the art, may be easily manufactured at low cost by following a manufacturing process for traditional trays with a punching operation, in which holes 30a, 32a are bored in edge 16. The handles may also be manufactured in series by means of automatized machineries, such as will be clear to a person skilled in the art, which are programmed to split the metal wire into segments having the lenght required to form the handles, and to bent each segment into the desired shape.

The handles may be pakaged separately from the trays and then installed by the user, or may be mounted during the manufacturing process, whereby the trays are put on the market with the handels that are already installed and ready to be used.

A preferred embodiment has been described herein, but of course many changes will be made by the person skilled in the art within the scope of the appended claims.

## Claims

1. A molded, aluminum-sheet tray (10) for foodstuff, having a bottom (12) and a tapered, peripheral wall (14) whose upper lip is bent outwards to form a substantially rectangular, cantilever edge (16), **characterized in that** each of two opposite portions (16a) of the edge (16) is provided with a removable handle (26, 28) consisting of a C-bent, metal wire whose opposite ends (26a, 28a) are bent into a hook shape and are removably inserted into a pair of holes (30a, 32a) formed in the respective portion (16a) of the edge (16).

2. The tray of claim 1, **characterized in that** said holes (30a, 32a) are bored near the inner border of the edge (16).

3. The tray of claim 1 or 2, **characterized in that** said holes are bored in the edge (16), in a mirror arrangement with respect to the axis perpendicular to the edge.

4. The tray of any of claims 1 to 3, **characterized in that** said metal wire is a stainless-steel, round bar 1 to 2 mm in diameter.

5. The tray of claim 4, **characterized in that** said stainless-steel wire is 1.5 mm in diameter.

## Patentansprüche

1. Formgepresstes Aluminiumbackblech (10) mit einem Boden (12) und einer sich erweiternden Umfangswand (14), deren oberer Randbereich nach außen gebogen ist, um einen im wesentlichen rechteckigen, freitragenden Rand (16) zu bilden,
**dadurch gekennzeichnet, dass** jeder von zwei gegenüberliegenden Abschnitten (16a) des Randes (16) mit einem abnehmbaren Griff (26, 28) versehen ist, der aus einem C-förmig gebogenen Metalldraht besteht, dessen entgegengesetzte Enden (26a, 28a) zu einer Hakenform gebogen und herausnehmbar in ein Paar Löcher (30a, 32a) eingeführt sind, die in dem entsprechenden Abschnitt (16a) des Randes (16) ausgebildet sind.

2. Backblech nach Anspruch 1,
**dadurch gekennzeichnet, dass** die Löcher (30a, 32a) nahe der inneren Begrenzung des Randes (16) gebohrt sind.

3. Backblech nach Anspruch 1 oder 2,
**dadurch gekennzeichnet, dass** die Löcher in dem Rand (16) spiegelbildlich bezüglich der zum Rand rechtwinkligen Achse gebohrt sind.

4. Backblech nach einem der Ansprüche 1 bis 3,
**dadurch gekennzeichnet, dass** der Metalldraht eine runde Stange aus rostfreiem Stahl mit 1 bis 2 mm Durchmesser ist.

5. Backblech nach Anspruch 4,
**dadurch gekennzeichnet, dass** der Draht aus rostfreiem Stahl einen Durchmesser von 1,5 mm hat.

## Revendications

1. Plateau moulé en feuille d'aluminium (10) pour aliments, comportant un fond (12) et une paroi périphérique resserrée (14) dont le rebord supérieur est replié vers l'extérieur pour former un bord en porte-à-faux sensiblement rectangulaire (16), **caractérisé en ce que** chacune des deux parties opposées (16a) du bord (16) est dotée d'une poignée amovible (26, 28) consistant en un fil métallique replié en C dont les extrémités opposées (26a, 28a) sont repliées en une forme de crochet et sont insérées de manière amovible dans une paire de trous (30a, 32a) formés dans la partie respective (16a) da bord (16).

2. Plateau selon la revendication 1, **caractérisé en ce que** lesdits trous (30a, 32a) sont percés près de la bordure intérieure du bord (16).

3. Plateau selon la revendication 1 ou 2, **caractérisé en ce que** lesdits trous sont percés dans le bord (16), dans un agencement en miroir par rapport à l'axe parpendiculaire au bord.

4. Plateau selon l'une quelconque des revendications 1 à 3, **caractérisé en ce que** ledit fil métallique est une barre ronde eu acier inoxydable de 1 à 2 mm de diamètre.

5. Plateau selon la revendication 4, **caractérisé en ce que** ledit fil en acier inoxydable fait 1,5 mm de diamètre.
